# EUROPÄISCHE PATENTSCHRIFT

(11) **EP 2 586 591 B1**
(45) Veröffentlichungstag und Bekanntmachung des Hinweises auf die Patenterteilung: **11.03.2015**
(21) Anmeldenummer: 11008688.1
(22) Anmeldetag: 29.10.2011
(51) Int. Cl.: B29C 51/46, B29C 51/32, B26F 1/40, B26D 5/00, B23Q 17/09, B26D 3/08, B29C 51/38, B26D 5/18

(54) **Verfahren zum Betreiben einer Thermoformmaschine**
Method for operating a thermoforming machine
Procédé de fonctionnement d'une machine de thermoformage

(43) Veröffentlichungstag der Anmeldung: 01.05.2013
(73) Patentinhaber: Gabler Thermoform GmbH & Co. KG, 23568 Lübeck (DE)
(72) Erfinder: Rowedder, Axel, 23623 Ahrensbök (DE)
(74) Vertreter: Grosse, Wolf-Dietrich Rüdiger

(56) Entgegenhaltungen:
- EP-A1- 1 637 946
- WO-A1-2009/000032
- DE-C1- 19 948 768

## Beschreibung

Die Erfindung betrifft ein Verfahren zum Betreiben einer Thermoformmaschine zum Formen von Artikeln aus Kunststoff, bei dem
- zwischen den mindestens zwei Teilen eines geöffneten Werkzeugs eine Folienbahn platziert wird,
- das Werkzeug dann geschlossen wird, indem die mindestens zwei Teile des Werkzeugs in eine Schließrichtung relativ zueinander bewegt werden,
- der Artikel anschließend ausgeformt wird und
- der Artikel dann aus der Folienbahn ausgestanzt wird,
wobei beim Schließen des Werkzeugs ein Anstanzvorgang erfolgt, bei dem die Folienbahn über einen Teil ihrer Dicke angestanzt wird, ohne die Folienbahn vollständig zu durchtrennen, und wobei beim Ausstanzen des Artikels die nach dem Anstanzen noch verbliebene Foliendicke durchschnitten wird.

Eine solche Thermoformmaschine, gemäß dem Oberbegriff des Anspruchs 1, zu deren Betrieb verschiedene Parameter für verschiedene Maschinenelemente durch Sensormittel gemessen werden und deren Verarbeitung dann zu einer Regelung dieser Elemente führt, ist durch die EP 1 637 946 A1 bekannt geworden. Für das Anstanzen und Ausstanzen der Folie wird dabei das Messen der Wärmeentwicklung, somit der Temperatur offenbart.

Eine Thermoformmaschine der gattungsgemäßen Art ist weiterhin beispielsweise aus der DE 91 08 344 U1 bekannt. Dort werden zwischen den relativ zueinander beweglichen Teilen eines Werkzeugs Kunststoffartikel (beispielsweise Margarineschalen, Trinkbecher, Behälterdeckel) aus thermoplastischen Kunststofffolien und Verbundfolien produziert. Dabei werden in der geschlossenen Stellung des aus Ober- und Unter-Werkzeug bestehenden Werkzeugs die Artikel geformt, indem die erwärmte Folie mit Druckluft in die Werkzeugkavität gedrückt wird, dann gestanzt und anschließend bei geöffneter Stellung des Werkzeugs aus diesem heraus und in eine nachgeschaltete Stapel- und Zählvorrichtung gefördert wird. Das Oberteil des Werkzeugs der Maschine ist hier an ein starres Oberjoch (Maschinenoberteil) montiert; das Unterteil des Werkzeugs ist indes höhenbeweglich sowie vorzugsweise schwenkbar ausgestaltet.

Bei allen Thermoformmaschinen der gattungsgemäßen Art muss das Werkzeug periodisch geschlossen und wieder geöffnet werden, wofür ein Bewegungselement eingesetzt wird.

Dabei wird aus Gründen der Wirtschaftlichkeit natürlich angestrebt, eine maximal mögliche Anzahl Artikel pro Zeiteinheit auf der Thermoformmaschine zu fertigen, weshalb auch pro Zyklus eine möglichst große Anzahl an Artikeln gefertigt werden soll. Allerdings wird auch die Belastung der Maschine in dem Maße größer, je mehr Artikel pro Hub vom Werkzeug ausgestanzt werden. Dadurch steigt die Belastung der Maschine und des Werkzeugs mit zunehmender Anzahl zu fertigender Artikel pro Arbeitszyklus.

Maschine und Werkzeug sind demgemäß einer hohen Belastung ausgesetzt, wenn Verschleißerscheinungen auftreten bzw. wenn die Einstellung der Maschine und/oder des Werkzeugs mangelhaft sind. Dies hat dann eine erhöhte Schneidkraft und das Auftreten übermäßig großer Stöße während des Prozesses zur Folge, d. h. von sogenannten Schocks. Diese Schocks belasten die mechanischen Komponenten der Maschine zusätzlich zu den statischen Stanzkräften. Besonders problematisch sind Elektrokomponenten, wie Kabel, Stecker, Klemmen, Motoren, Lüfter, Drehgeber, usw., da diese besonders schocksensibel sind.

Derartige Schocks entstehen generell und insbesondere unmittelbar nach dem Durchstanzen. Die Folie wird vor dem eigentlichen Formen angestanzt, dann mittels eines Stempels (Vorstrecker) und Druckluft verformt und anschließend durch einen weiteren, kleinen Maschinenhub ausgestanzt. Unmittelbar nach dem Durchstanzen der Folie wird die im Maschinengestell gespeicherte Federenergie, hervorgerufen durch Elastizitäten in der Maschine, freigesetzt. Die Maschinen-Verformungen stellen sich dann in sehr kurzer Zeit zurück. Messungen beim Auftreten der oben genannten Unzulänglichkeiten haben Beschleunigungen an den Bauteilen der Maschine von mehr als 100 g ergeben, d. h. im Bereich von mehr als 1.000 m/s². Die Größenordnung auftretender Durchbiegungen liegt im Bereich von mehreren Zehnteln mm im Werksbetrieb mit einer neuwertigen Maschine und einem neuen Werkzeug und kann auf das Doppelte und mehr ansteigen.

Verfahrensbedingt muss die Folie nach der Erwärmung zunächst angestanzt werden; der Hubtisch verweilt in dieser Position zwecks Ausformung der Artikel mit Druckluft, um dann wieder anzufahren und schließlich die Folie auszustanzen (durchzustanzen). Der Schnitt erfolgt überwiegend im Matrizenverfahren und es werden nicht unerhebliche Schocks initiiert, sobald die Stempel des Werkzeugs das Material durchdringen. Die Schockgröße wird im wesentlichen beeinflusst von der Werkzeuggüte, der Schneidenlänge, der Schneidenschärfe, der Maschinengüte, der Materialgüte, der Materialtemperatur und der Materialstärke. Dabei hat das Einrichten der Maschine einen wesentlichen Einfluss. Das noch warme Material soll möglichst weit angestanzt werden, um so die ausgekühlte Restmaterialstärke und somit die Stanzkraft und die initiierten Schocks möglichst gering zu halten.

Demzufolge ist es nötig, das richtige Verhältnis zwischen Anstanzen der Folie und deren Durchstanzen einzuhalten, um optimale Fertigungsbedingungen aufrecht zu erhalten.

Der Erfindung liegt daher die Aufgabe zugrunde, ein Verfahren zum Betreiben einer Thermoformmaschine vorzuschlagen, mit dem es möglich ist, das optimale Verhältnis zwischen dem Anstanzen der Folie und dem Ausstanzen (Durchstanzen) derselben aufrecht zu erhalten, wobei auf eine automatische Einstellung Wert gelegt wird, um den Fertigungsprozess möglichst ohne Aktivitäten des Maschinenbedieners am effektivsten betreiben zu können.

Die Lösung dieser Aufgabe durch die Erfindung ist dadurch gekennzeichnet, dass das Verfahren die Schritte umfasst:
a) Messen einer auf die Thermoformmaschine wirkenden maximalen Belastungsgröße, die beim Anstanzen auf die Thermoformmaschine, insbesondere auf einen Teil der Thermoformmaschine, wirkt,
b) Messen einer auf die Thermoformmaschine wirkenden maximalen Belastungsgröße, die beim Ausstanzen auf die Thermoformmaschine, insbesondere auf einen Teil der Thermoformmaschine, wirkt,
c) Verändern der Hublage eines der Teile des Werkzeugs, bis das Verhältnis der gemessenen maximalen Belastungsgrößen einen vorgegebenen Wert erreicht oder in einem vorgegebenen Bereich liegt,
und
wobei die gemessenen maximalen Belastungsgrössen die Beschleunigungen, die Wege oder die Spannungen sind, die beim Anstanzen und beim Ausstanzen an einem Teil der Thermoformmaschine gemessen werden.

Bevorzugt wird das Verfahren durchgeführt, sobald die Thermoformmaschine auf Betriebstemperatur ist. Dies kann dadurch festgestellt werden, dass das die Maschinentemperatur an einer definierten Messstelle eine zeitliche Änderung aufweist, die unterhalb eines vorgegebenen Temperaturintervalls ist. Ist dem so, kann daraus geschlossen werden, dass ein thermisch stabiler Zustand erreicht ist.

Das Verändern der Hublage gemäß obigem Schritt c) erfolgt dabei bevorzugt dergestalt, bis die Differenz der gemessenen Beschleunigungen beim Anstanzen und beim Ausstanzen minimiert ist und der Größtwert im Bereich des Durchstanzens liegt.

Das Verändern der Hublage eines der Teile des Werkzeugs gemäß obigem Schritt c) erfolgt bevorzugt nur dann, wenn das Werkzeug sich nicht in der geschlossenen Stellung befindet.

Ferner hat es sich bewährt, wenn das vorgeschlagene Verfahren periodisch nach einer vorgegebenen Anzahl Produktionszyklen durchgeführt wird. Dies kann automatisch von der Maschinensteuerung veranlasst werden, so dass keine Eingriffe seitens des Maschinenbedieners hierfür nötig sind.

Die vorgeschlagene Vorgehensweise stellt auf der Überlegung ab, dass - um Belastungsmessungen miteinander vergleichen zu können - eine möglichst identisch eingerichtete Anstanztiefe gewährleistet sein muss. Die Anstanztiefe hat einen wesentlichen Einfluss auf die Maschinen-Last und somit auf die Schockbelastung der Bauteile und Antriebe während der Produktion von Artikeln.

Prinzipiell ist ein möglichst tiefes Anstanzen von Vorteil. Dies zu erreichen ist allerdings nicht einfach, da die Einstellung der Einstanztiefe von den Temperaturen der Schneiden abhängig ist. Demgemäß ist eigentlich ein Nachjustieren der Einstanztiefe nach der Warmlaufphase des Werkzeugs erforderlich. Diese Forderung wird allerdings im Produktionsalltag häufig nicht erfüllt.

Demgemäß wird häufig mit nicht optimalen Prozessparametern gearbeitet, was insbesondere hinsichtlich der Stoßbelastung der Maschinen nachteilig ist.

Die bei der Projektierung einer Maschine zugrunde gelegte Einstellung und insbesondere Einstanztiefe führt zu einer optimalen Maschinenbelastung. Hier werden die Maschinenbelastung beim jeweilig verwendeten Material und die Schnittlänge berechnet. Die Materialdicke wird hier häufig mit 0,2 mm angesetzt. In der Praxis kommt es dann aber immer wieder zu Maschinenbelastungen, die eine Überlastung um 100 % und mehr aufweisen.

Mit der vorgeschlagenen Vorgehensweise kann die Verfügbarkeit der Maschine signifikant erhöht werden. Es ist möglich, ungeplante Reparatur- und Wartungsarbeiten zu reduzieren. Der korrekte Betrieb der Thermoformmaschine kann verbessert gewährleistet werden. Demgemäß wird in der Thermoformmaschine mit einfachen Mitteln eine automatische Prozessoptimierung vorgesehen. Diese ist Bestandteil der Maschine selber, also unabhängig vom konkret eingebauten Werkzeug.

Vorzugsweise wird die Sensorik auf dem starren Oberjoch des Maschinenrahmens platziert, möglichst mittig der Biegelinie. Das Oberjoch ist zumeist als Gussteil ausgeführt und unterliegt Durchbiegungen und Schocks, so dass eine verlässliche Auswertung möglich ist. Generell sind aber auch andere Messorte möglich. Als Sensor eignen sich Dehnungsmessstreifen, die Spannungen bzw. Verformungen erfassen, also eine statische Last. Beschleunigungsaufnehmer können gleichermaßen zur Überwachung eingesetzt werden, mit denen dynamische Lasten erfasst werden können. Generell werden so Beschleunigungen, Geschwindigkeiten und/oder Wege des Bauteils der Thermoformmaschine erfasst.

Die von der Sensorik ermittelten Belastungen werden von der Maschinensteuerung ausgewertet.

Demgemäß erlaubt die Erfindung eine Optimierung und ein bestmögliches Einrichten der Produktionsbedingungen bzw. der Maschine und des Werkzeugs. Mit der vorgeschlagenen Maßnahme bzw. Ausgestaltung kann somit eine effektive Prozessüberwachung vorgenommen werden, die Bestandteil der Maschine ist. Möglich wird eine Prozessoptimierung dahingehend, dass automatisch die optimale Maschineneinrichtung gefunden und aufrecht erhalten wird.

In der Zeichnung ist ein Ausführungsbeispiel der Erfindung dargestellt. Es zeigen:
- Fig. 1: schematisch eine Thermoformmaschine mit noch geöffnetem Werkzeug;
- Fig. 2: in der Darstellung gemäß Fig. 1 die Thermoformmaschine bei geschlossenem Werkzeug;
- Fig. 3: einen Detailausschnitt des Werkzeugs vor dem Zusammenfahren der Werkzeughälften;
- Fig. 4: den Detailausschnitt des Werkzeugs nach Fig. 3 nach dem Anstanzen;
- Fig. 5: die Einzelheit "X" nach Fig. 4;
- Fig. 6: den Detailausschnitt des Werkzeugs nach Fig. 3 nach dem Ausstanzen; und
- Fig. 7, Fig. 8 Fig. 9: und schematisch drei Verläufe der Werkzeugbewegung sowie der zugehörigen gemessenen Beschleunigungen eines Maschinenteils für drei unterschiedliche Einstellungen der relativen Lage zwischen den beiden Werkzeugteilen.

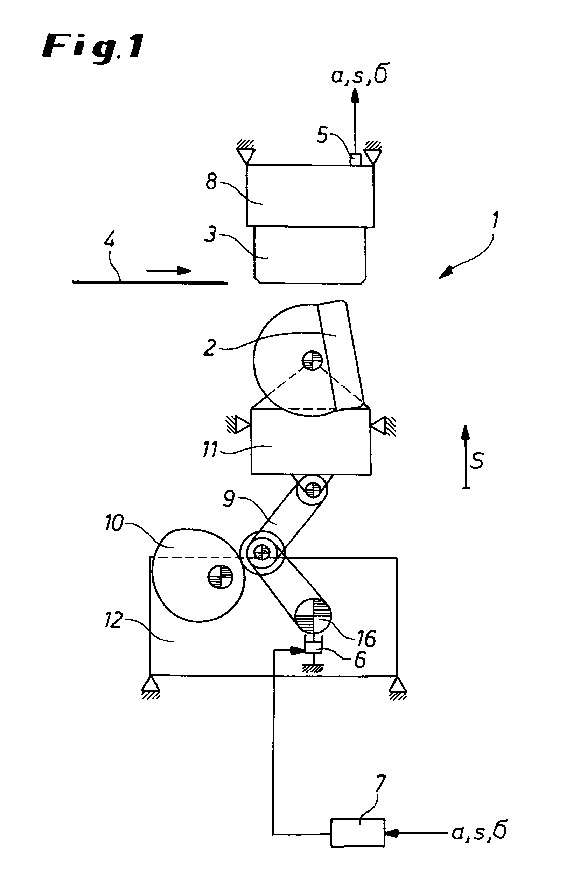

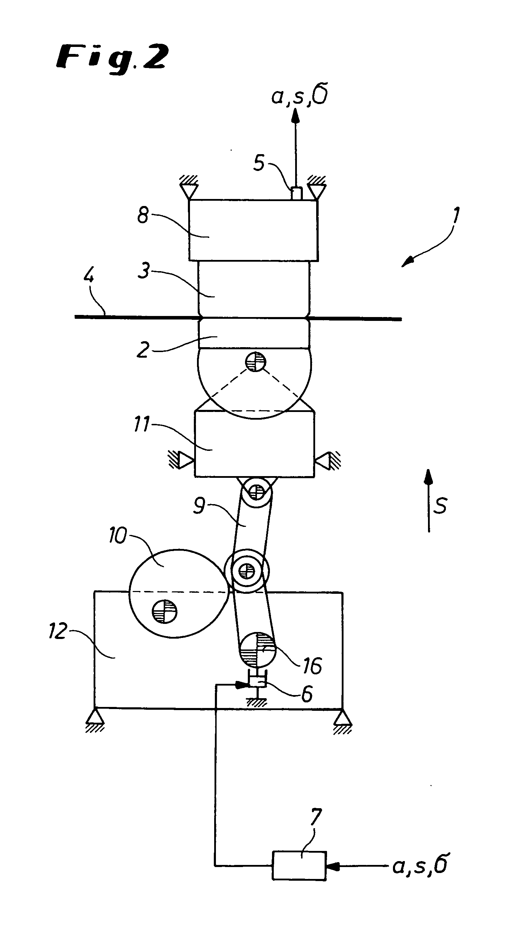

In den Figuren 1 und 2 ist eine Thermoformmaschine 1 zu sehen, die ein zweiteiliges Werkzeug 2, 3 einsetzt, um Artikel aus Kunststoff aus einer Kunststoff-Folienbahn 4 auszuformen. Der Thermoformprozess ist hinlänglich bekannt, wozu beispielsweise auf die DE 91 08 344 U1 Bezug genommen wird. An einem ortsfesten Oberjoch 8 ist ein festes Werkzeugteil 3 angeordnet. Das andere Werkzeugteil 2 ist indes als bewegliches Werkzeugteil ausgeführt und kann sich relativ zum festen Werkzeugteil 3 bewegen. Dabei kann eine kombinierte translatorische und Schwenkbewegung zum Einsatz kommen, um nach dem Ausformen von Artikeln diese einfacher aus der Maschine abzuführen und zu stapeln. Die Bewegung des Werkzeugs und insbesondere des beweglichen Werkzeugteils 2 wird von einem Kniehebel 9 bewerkstelligt, an dem eine Kurvenscheibe 10 ansetzt. Durch diesen Bewegungsmechanismus wird ein Untertisch 11, auf dem das bewegliche Werkzeugteil 2 angebracht ist, relativ zu einem Unterjoch 12 bewegt.

Bei der Bewegung der Kurvenscheibe 10 wird demgemäß das Werkzeug 2, 3 geöffnet bzw. geschlossen; die Werkzeugschließrichtung ist mit S angegeben.

Die Thermoformmaschine 1 ist mit Sensormitteln 5 versehen. Vorliegend sind diese als Beschleunigungssensor ausgebildet und auf dem ortsfesten Oberjoch 8 angeordnet. Generell gilt, dass die Sensormittel 5 ausgebildet sind, um insbesondere eine Beschleunigung a (in Werkzeugschließrichtung S), eine Auslenkung s und/oder eine Spannung σ zu messen.

Wie in Fig. 1 und Fig. 2 schematisch angedeutet ist, wird der von den Sensormitteln 5 gemessene Ist-Wert (für die Beschleunigung a, die Auslenkung s bzw. die Spannung σ) zu einer Steuerung 7 geleitet.

Weiterhin kann gesehen werden, dass der Untertisch 11 höhenverstellbar angeordnet ist, d. h. ein Aktuator 6 (der nur sehr schematisch angedeutet ist) kann den Untertisch 11 geringfügig anheben bzw. absenken, so dass der - bei geschlossenem Werkzeug 2, 3 - wirksame Abstand in Schließrichtung S zwischen den beiden Werkzeugteilen 2, 3 einstellbar ist. Der Aktuator 6 wird von der Steuerung 7 angesteuert. Die Untertischverstellung erfolgt über ein Verdrehen einer Exzenterwelle 16. Der Stützpunkt der Kniehebel - und somit der Untertisch - haben eine variable Höhe.

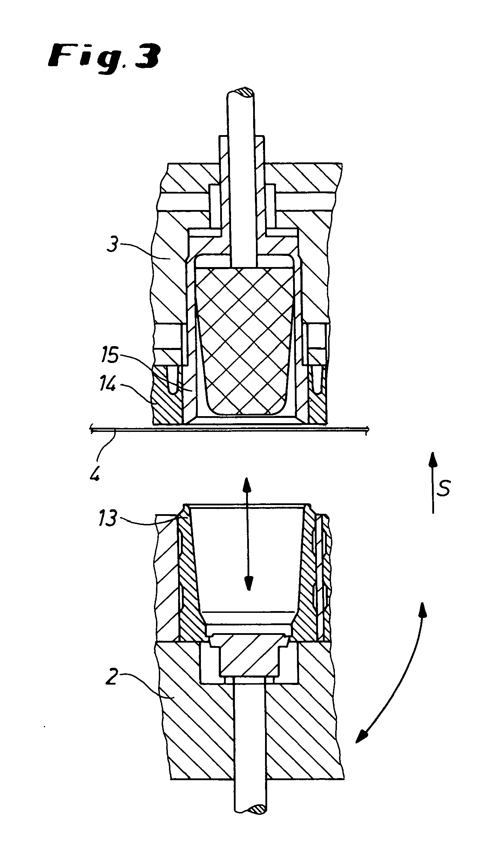

Der Zweck dessen wird ersichtlich, wenn die Figuren 3 bis 6 näher betrachtet werden. Dargestellt ist hier ein detaillierter Ausschnitt der beiden Werkzeughälften 2, 3.

In Fig. 3 ist der Zustand zu sehen, bei dem die Folienbahn 4 zwischen die beiden Werkzeughälften 2, 3 geschoben ist, diese aber noch nicht geschlossen wurden. Das Werkzeug weist einen Schnittstempel 13 (im Werkzeugteil 2) und eine zugeordnete Schnittplatte 14 (im Werkzeugteil 3) auf; im Werkzeugteil 3 ist ferner ein Niederhalter 15 für die Folie 4 vorhanden.

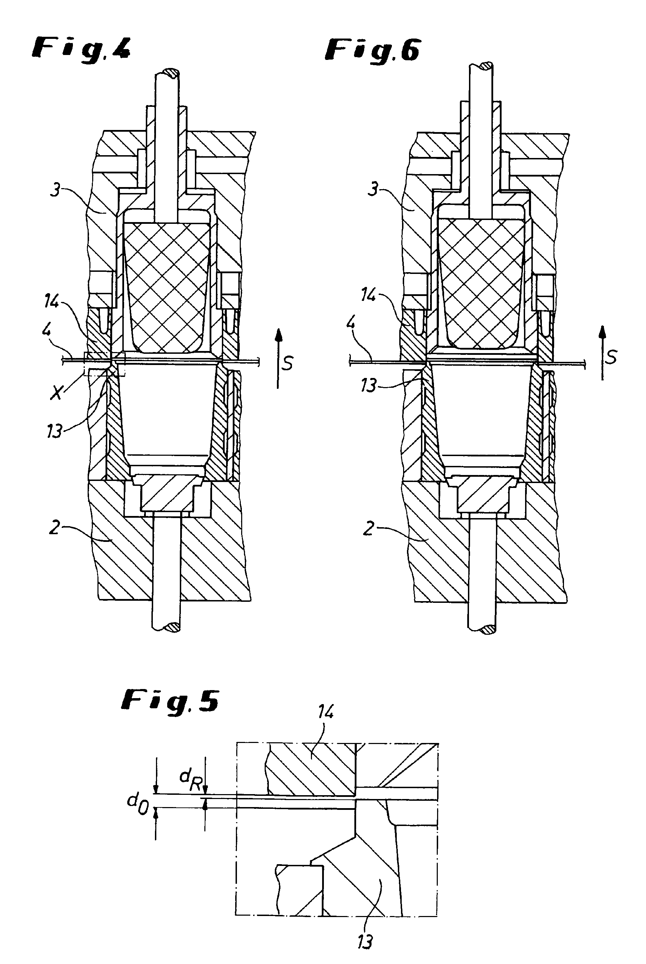

In Fig. 4 ist zu sehen, dass das Werkzeug nun geschlossen wurde, allerdings nur bis zu einer ersten Relativposition der beiden Werkzeugteile 2, 3, und zwar in der Weise, dass die Folie 4 angestanzt, aber noch nicht durchgestanzt bzw. ausgestanzt worden ist. Dies ist erforderlich, um das Produkt während des Form - und Kühlvorgangs zu fixieren und die Formluft abzudichten. Im Detail "X" gemäß Fig. 5 ist zu sehen, dass von der gesamten Foliendicke d₀ nur ein Teil angestanzt wurde, d. h. es liegt noch eine Folienrestdicke d_{R} vor.

Erst im Status, der in Fig. 6 dargestellt ist, wird das Werkzeugteil 2 noch weiter in Schließrichtung S auf das Werkzeugteil 3 zugefahren, so dass die Folie 4 ausgestanzt wird. Die Differenz zwischen Formstellung (Anstanzen) und Stanzposition (Ausstanzen) beträgt typischerweise ca. 1 mm.

Demgemäß erfolgt das Stanzen der Folie 4 durch zwei Teil-Stanzvorgänge, nämlich das Anstanzen und das Ausstanzen.

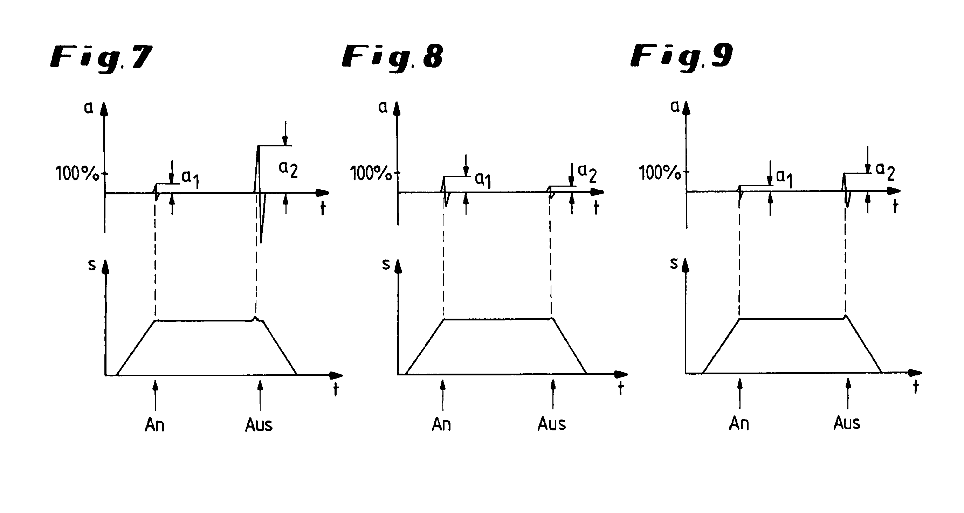

Wird der Verlauf des unteren Werkzeugteils 2 als Weg-Zeit-Kurve dargestellt, d. h. der Verlauf des Weges s über der Zeit t, ergeben sich die in den Figuren 7, 8 und 9 unten skizzierten Kurven. Die Zeitpunkte, zu denen angestanzt wird und zu denen ausgestanzt wird, sind mit "An" bzw. mit "Aus" markiert. Die Stelle "Aus" ist durch einen Stanznocken definiert, der auf der Kurvenscheibe 10 angeordnet ist und den abschließenden Ausstanzhub vornimmt.

Oberhalb der Kurvenverläufe sind qualitativ die vom Sensormittel 5 detektierten Verläufe der Beschleunigung a über der Zeit aufgetragen, wobei in den drei Figuren 7, 8 und 9 unterschiedliche Einstellungen der beiden Werkzeugteile 2, 3 (eingestellt über den Aktuator 6) vorliegen, und zwar Fig. 7 - Ausstanztiefe zu klein, Fig. 8 - Ausstanztiefe zu groß und Fig. 9 - Ausstanztiefe optimal.

Bei der vorgeschlagenen automatischen Anstanztiefen-Einstellung wird wie folgt vorgegangen:
Die Thermoformmaschine wird zunächst in üblicher Weise in Betrieb genommen. Die auf die Maschine wirkende Belastung wird mittels der Sensormittel 5 bei jedem Arbeitstakt erfasst. Nach einer vordefinierten Anzahl von Produktionstakten (wobei das Werkzeug warmgelaufen sein muss) beginnt die automatische Anstanztiefen-Verstellung den Untertisch 11 anzuheben. Die Verstellung erfolgt dabei ausschließlich bei offenem Werkzeug. Die Steuerung 7 erfasst jetzt die maximale Belastung während des Zyklus, insbesondere beim Anstanzen und beim Ausstanzen und vor allem die hierbei auftretende maximale Belastung, d. h. den Betrag der auftretenden maximalen Beschleunigung a.

Beim Kaltdurchstanzen wird das Maximum der Belastung stets im Bereich des Stanznockens liegen, wie es in Fig. 7 zu sehen ist (s. Beschleunigung a₂). Die Beschleunigung a₁ beim Anstanzen ist deutlich kleiner als die Beschleunigung a₂ beim Ausstanzen. Vorliegend beträgt die Beschleunigung a₂ beim Ausstanzen ca. 250 % eines auf 100 % bezifferten Zielwerts, der bei optimaler Einstellung erreicht werden kann.

Die Anstanztiefe wird jetzt sukzessive weiter nachgestellt, d. h. erhöht, wofür die Steuerung 7 den Aktuator 6 entsprechend betätigt (d. h. der Untertisch 11 wird angehoben), und zwar bis die Lage des kleiner werdenden Maximums im Bereich des Tischschliessens, d. h. beim Anstanzen "An" liegt. Dies ist in Fig. 8 angedeutet. Hier ist nun die Beschleunigung a₂ beim Ausstanzen deutlich abgefallen, allerdings auf Kosten einer gestiegenen Beschleunigung a₁ beim Anstanzen. Die Folie wird hier bereits in der eigentlichen Ausstanzposition durchgestanzt. Das Maximum beträgt ca. 80 % der optimalen Durchstanzlast. Demnach wäre die Belastung bei dieser Einstellung am kleinsten. Die Produktqualität ist aber verfahrensbedingt nicht optimal.

Nun beginnt die Anstanztiefen-Verstellung den Untertisch 11 wieder nach unten, d. h. vom Werkzeugteil 3 weg, zu fahren. Das Maximum der Beschleunigung a₂ beim Ausstanzen wächst wieder, die Beschleunigung a₁ fällt aber wieder ab. Wenn die Lage des Maximums der Belastung wieder im Bereich des Stanznockens, d. h. beim Ausstanzen liegt, ist die optimale Einstellung gefunden. Dies ist in Fig. 9 dargestellt. Das Ziel ist es, die Lage des Maximums wieder an die Durchstanzposition zu setzen.

Die Anstanztiefe, d. h. die Eintauchtiefe des Schnittstempels in die Folie, während die Werkzeughälften für die Dauer der Formzeit in der Formstellung verweilen, musste bislang durch das Verstellen der unteren Tischposition (manuell) eingerichtet werden. Nunmehr kann automatisch und unabhängig von der verwendeten Foliendicke die Formstellung des Untertischs 11 so weit eingestellt werden, dass bevorzugt lediglich ca. 0,2 mm Restfoliendicke nach dem Anstanzen verbleiben.

Diese Restdicke kühlt während des Formens aus und definiert die erforderlichen Durchstanzkräfte des kalten Materials. Höhere Restdicken haben höhere Durchstanzkräfte zur Folge.

Mit stumpfer werdenden Schneiden des Werkzeugs bedarf die Anstanztiefe einer Nachstellung. Deshalb wird während der Produktion in vorgegebenen Zeitabständen bzw. Produktionsmengen das beschriebene Verfahren wiederholt.

So ist gewährleistet, dass die Maschine jederzeit optimal eingerichtet ist. Die Anstanztiefe ist minimiert.

Ist bei besonderen Produkten ein warmes Durchstanzen gewünscht, so lässt sich das Verfahren mit modifizierter Prozessführung ebenfalls anwenden.

Nach dem vorgeschlagenen Verfahren ist die Maschine jederzeit optimal eingerichtet. Mit stumpfer werdenden Schneiden nimmt die Maschinenbelastung allerdings zu. Nähert sich die Belastung einem Grenzwert, kann der Bediener der Maschine per Maschinendisplay auf die veränderten Produktionsparameter hingewiesen werden (z. B. durch den Hinweis "Schneiden stumpf", "unparallele Formstation", "Schwenktischzentrierung mangelhaft" oder "Folienmängel (Zusammensetzung, Temperatur, Dicke)").

Ist der genannte Grenzwert erreicht, kann automatisch am Ende eines Taktzyklus eine Abschaltung erfolgen.

Dabei kann die zulässige Schockgrenze, d. h. die zulässige Grenze für gemessene Beschleunigungswerte, die für die Maschine definiert ist, als absolute Obergrenze angegeben werden. Eine Warngrenze ist mit einem entsprechend kleineren Wert definiert.

Das Belastungssignal wird bei jedem Maschinentakt gespeichert und kann visuell am Bildschirm der Maschinensteuerung dargestellt werden. Aufgezeichnet und dargestellt werden kann auch die Entwicklung der prozentualen Belastung über der Zeit. So kann der Maschinenbediener die sich ergebenden Veränderung über die Zeit beobachten. Dabei können auch Mittelwerte zugrunde gelegt werden, die sich über eine Anzahl an Arbeitszyklen ergeben.

Dabei kann es zweckmäßig sein, nach der Inbetriebnahme einer Thermoformmaschine individuelle optimale Belastungswerte für die Maschinen zu speichern, von denen aus dann auf die genannte 100 % - Grenze hochgerechnet wird, die die Grenze der zulässigen Belastung darstellt. Die optimalen Belastungswerte werden ermittelt bei optimal eingerichteter, neuer Maschine beim Einsatz eines scharfen, korrekt montierten Werkzeugs, bei einer Formstation ohne Spiel (Schwenkgetriebe, Schwenkkupplung, Knie, Rollen, Buchsen neuwertig) und bei einer Folie, die den genauen Kundenspezifikationen entspricht. Der so ermittelte Wert dient als Referenzwert für die Maschine bei deren Inbetriebnahme, d. h. als Sollwert. Somit ist eine Vorgabe für die Aufstellung vorhanden.

Möglich ist es, vor der Durchführung einer Reparatur oder vor einem Werkzeugwechsel den aktuellen Belastungswert zu speichern. Hiermit ist es möglich, einen relativen Bezug für die Bewertung nach der Reparatur zu haben.

### Bezugszeichenliste:

- 1: Thermoformmaschine
- 2, 3: Werkzeug
- 2: bewegliches Werkzeugteil (Unterwerkzeug)
- 3: festes Werkzeugteil (Oberwerkzeug)
- 4: Folienbahn
- 5: Sensormittel
- 6: Aktuator
- 7: Steuerung
- 8: Oberjoch
- 9: Kniehebel
- 10: Kurvenscheibe
- 11: Untertisch
- 12: Unterjoch
- 13: Schnittstempel
- 14: Schnittplatte
- 15: Niederhalter
- 16: Exzenterwelle

- S: Schließrichtung
- a, s, σ: Belastungsgröße
- a: Beschleunigung
- s: Auslenkung
- σ: Spannung
- d₀: Foliendicke
- d_{R}: Folienrestdicke

- a₁: maximale Beschleunigung beim Anstanzen
- a₂: maximale Beschleunigung beim Ausstanzen
- s₁: maximaler Weg beim Anstanzen
- s₂: maximaler Weg beim Ausstanzen
- σ₁: maximale Spannung beim Anstanzen
- σ₂: maximale Spannung beim Ausstanzen

## Patentansprüche

1. Verfahren zum Betreiben einer Thermoformmaschine (1) zum Formen von Artikeln aus Kunststoff, bei dem
- zwischen den mindestens zwei Teilen eines geöffneten Werkzeugs (2, 3) eine Folienbahn (4) platziert wird,
- das Werkzeug (2, 3) dann geschlossen wird, indem die mindestens zwei Teile des Werkzeugs (2, 3) in eine Schließrichtung (S) relativ zueinander bewegt werden,
- der Artikel dann ausgeformt wird und
- der Artikel anschließend aus der Folienbahn (4) ausgestanzt wird,
wobei beim Schließen des Werkzeugs (2, 3) ein Anstanzvorgang erfolgt, bei dem die Folienbahn (4) über einen Teil ihrer Dicke angestanzt wird, ohne die Folienbahn (4) vollständig zu durchtrennen, und
wobei beim Ausstanzen des Artikels die nach dem Anstanzen noch verbliebene Foliendicke durchschnitten wird,
**dadurch gekennzeichnet,**
**dass** das Verfahren die Schritte umfasst:
a) Messen einer auf die Thermoformmaschine (1) wirkenden maximalen Belastungsgröße (a₁, s₁, σ₁), die beim Anstanzen auf die Thermoformmaschine (1), insbesondere auf einen Teil der Thermoformmaschine (1), wirkt,
b) Messen einer auf die Thermoformmaschine (1) wirkenden maximalen Belastungsgröße (a₂, s₂, σ₂), die beim Ausstanzen auf die Thermoformmaschine (1), insbesondere auf einen Teil der Thermoformmaschine (1), wirkt,
c) Verändern der Hublage eines der Teile (2) des Werkzeugs (2, 3), bis das Verhältnis (a₁/a₂, s₁/s₂, σ₁/σ₂) der gemessenen maximalen Belastungsgrößen (a₁, a₂, s₁, s₂, σ₁, σ₂) einen vorgegebenen Wert erreicht oder in einem vorgegebenen Bereich liegt, wobei die gemessenen maximalen Belastungsgrössen (a₁, a₂, s₁, s₂, σ₁, σ₂) die Beschleunigungen, die Wege oder die Spannungen sind, die beim Anstanzen und beim Ausstanzen an einem Teil der Thermoformmaschine (1) gemessen werden.

2. Verfahren nach Anspruch 1, **dadurch gekennzeichnet, dass** es durchgeführt wird, sobald die Thermoformmaschine (1) auf Betriebstemperatur ist.

3. Verfahren nach Anspruch 2, **dadurch gekennzeichnet, dass** das Verändern der Hublage gemäß Schritt c) von Anspruch 1 erfolgt, bis die Differenz der Maxima der Beschleunigungen von An- und Durchstanzen minimiert ist und der Größtwert im Bereich des Durchstanzens liegt.

4. Verfahren nach einem der Ansprüche 1 bis 3, **dadurch gekennzeichnet, dass**
das Verändern der Hublage eines der Teile (2) des Werkzeugs (2, 3) gemäß Schritt c) von Anspruch 1 erfolgt, wenn das Werkzeug (2, 3) sich nicht in der geschlossenen Stellung befindet.

5. Verfahren nach einem der Ansprüche 1 bis 4, **dadurch gekennzeichnet, dass**
es periodisch nach einer vorgegebenen Anzahl Produktionszyklen durchgeführt wird.

## Claims

1. A method for operating a thermoforming machine (1) for moulding articles of plastic, in which
- a film sheet (4) is placed between the at least two parts of an opened mould (2, 3),
- the mould (2, 3) is then closed by moving the at least two parts of the mould (2, 3) relative to one another in a closing direction (S),
- the article is then moulded, and
- the article is subsequently punched out of the film sheet (4),
wherein a preliminary punching process, in which the film sheet (4) is cut over part of its thickness without completely cutting through the film sheet (4), is carried out when the mould (2, 3) is closed, and
wherein the film thickness remaining after the preliminary punching process is cut when the article is punched out,
**characterized in**
**that** the method comprises the steps of:
a) measuring a maximum load parameter (a₁, s₁, σ₁) acting upon the thermoforming machine (1), which acts upon the thermoforming machine (1), particularly upon a part of the thermoforming machine (1), during the preliminary punching process,
b) measuring a maximum load parameter (a₂, s₂, σ₂) acting upon the thermoforming machine (1), which acts upon the thermoforming machine (1), particularly upon a part of the thermoforming machine (1), during the punch-out process, and
c) varying the stroke position of one of the parts (2) of the mould (2, 3) until the ratio (a₁/a₂, s₁/s₂, σ₁/σ₂) of the measured maximum load parameters (a₁, a₂, s₁, s₂, σ₁, σ₂) reaches a predefined value or lies within a predefined range, wherein the measured maximum load parameters (a₁, a₂, s₁, s₂, σ₁, σ₂) are the accelerations, the displacements or the stresses measured on a part of the thermoforming machine (1) during the preliminary punching process and during the punch-out process.

2. The method according to Claim 1, **characterized in that** it is carried out as soon as the thermoforming machine (1) is at operating temperature.

3. The method according to Claim 2, **characterized in that** the variation of the stroke position in accordance with step c) of Claim 1 is carried out until the difference between the maximum accelerations during the preliminary punching process and the punch-out process is minimized and the highest value lies within the range of the punch-out process.

4. The method according to one of Claims 1 to 3, **characterized in that** the variation of the stroke position of one part (2) of the mould (2, 3) in accordance with step c) of Claim 1 is carried out when the mould (2, 3) is not in the closed position.

5. The method according to one of Claims 1 to 4, **characterized in that** it is carried out periodically after a predefined number of production cycles.

## Revendications

1. Procédé d'utilisation d'une machine de thermoformage (1) pour le moulage d'articles en matière plastique, dans lequel
- une bande de film (4) est placée entre les au moins deux pièces d'un outil ouvert (2, 3),
- l'outil (2, 3) est ensuite refermé en déplaçant les au moins deux pièces de l'outil (2, 3) l'une par rapport à l'autre dans un sens de fermeture (S).
- l'article est ensuite formé et
- l'article est ensuite découpé dans la bande de film (4),
dans lequel, à la fermeture de l'outil (2, 3), il y a une opération de découpe lors de laquelle la bande de film (4) est découpée sur une partie de son épaisseur sans sectionner entièrement la bande de film (4) et
dans lequel, lors du découpage de l'article, l'épaisseur de film restant après le découpage est sectionnée,
**caractérisé en ce que**
le procédé comprend les étapes suivantes :
a) mesure d'une valeur de charge maximale (a1, s1, 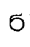 1) qui agit lors du découpage sur la machine de thermoformage (1), en particulier sur une partie de la machine de thermoformage (1),
b) mesure d'une valeur de charge maximale (a2, s2, 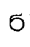 2) qui agit lors du découpage sur la machine de thermoformage (1), en particulier sur une partie de la machine de thermoformage (1),
c) modification de la position de levage d'une des pièces (2) de l'outil (2, 3) jusqu'à ce que le rapport (a1/a2, s1/s2, σ1/σ2) entre les valeurs de charge maximales mesurées (a1, a2, s1, s2, σ1, σ2) atteigne une valeur prédéfinie ou se situe dans une plage prédéfinie, les valeurs de charge maximales mesurées (a1, a2, s1, s2, σ1, σ2) étant les accélérations, les courses ou les tensions qui sont mesurées lors du découpage et lors du sectionnement sur une pièce de la machine de thermoformage (1).

2. Procédé selon la revendication 1, **caractérisé en ce qu'**il est réalisé dès que la machine de thermoformage (1) est à la température de fonctionnement.

3. Procédé selon la revendication 2, **caractérisé en ce que** la modification de la position de levage a lieu suivant l'étape c) de la revendication 1 jusqu'à ce que la différence entre les maxima des accélérations de découpe et sectionnement soit minimisée et que la valeur maximale se situe dans la zone du sectionnement.

4. Procédé selon une des revendications 1 à 3, **caractérisé en ce que** la modification de la position de levage d'une des pièces (2) de l'outil (2, 3) a lieu suivant l'étape c) de la revendication 1 si l'outil (2, 3) ne se trouve pas en position fermée.

5. Procédé selon une des revendications 1 à 4, **caractérisé en ce qu'**il est réalisé périodiquement après un nombre prédéfini de cycles de production.
